# EUROPEAN PATENT APPLICATION

(11) **EP 4 220 149 A1**
(43) Date of publication of application: **02.08.2023**
(21) Application number: 23153701.0
(22) Date of filing: 27.01.2023
(51) Int. Cl.: G01N 29/04, G01N 29/06, G01N 29/44, G06F 17/00

(54) **EFFICIENT STORAGE OF HIGH-RESOLUTION INDUSTRIAL ULTRASONIC DATA**

(30) Priority: 27.01.2022 GB 202201020
(71) Applicant: Darkvision Technologies Inc., North Vancouver, British Columbia V7H 0A1 (CA)
(72) Inventor: ZAHIRI AZAR, Reza, North Vancouver, V7H 0A1 (CA)
(74) Representative: Ter Meer Steinmeister & Partner

(57) **Abstract**

A method and device for processing ultrasonic data from an industrial inspection device. Ultrasonic reflections from a high-resolution phased array are sampled at high-frequency to create a large volume of data. The data are converted to I/Q data and compressed to a manageable size. An external computer can beamform and render an image without restoring the compressed data to raw form. This method may be used for in-line inspection, downhole inspection, or ultrasonic testing.

## Description

### FIELD OF THE INVENTION

The invention relates generally to processing industrial ultrasound data, in particular, large streams of raw channel data collected from high density phased arrays.

### BACKGROUND OF THE INVENTION

Ultrasound is commonly used to inspect parts and tubulars, such as pipelines and wells, for defects. The ultrasound waves reflect off surface features and penetrate materials to reflect off cracks and voids then return to the ultrasound transducer. Devices for in-line inspection (ILI) of pipelines and Non-Destructive Testing (NDT) of parts electronically sample the ultrasound reflections and convert them to digital data. These Radio Frequency data are termed 'RF data' as the data are sampled in the radio frequency band. This data may be stored or streamed to an operator.

Downhole devices typically beamform on the device in real-time and store the beamformed image in local memory.

While improving the image resolution by increasing transducer count and sampling frequency is desirable, the devices eventually struggle to store, send or process that much more data. Thus, the transducer count and/or the sampling rate is kept within a manageable range.

Phased array transducers are particularly effective for improving the image quality. These arrays typically include hundreds of transducer elements that acquire huge amounts of data, especially running continuously over the length of a pipeline, which data will be beamformed or otherwise processed in order to view it. In future tools, it is predicted that the data may accumulate at 50TB per kilometer of pipe. This is a formidable amount to store on tool or transfer off.

In portable Ultrasonic Testing (UT), the issue is less about data storage and more about real-time processing and transfer of data to the operator's computing device. Future scanners could generate over 10Gbit/sec of data, exceeding common network technologies or data transfer solutions.

### SUMMARY OF THE INVENTION

One general aspect includes a method of processing ultrasound data may include the steps of: sampling ultrasound reflections at high-frequency to created raw sampled data; converting the raw radio frequency (RF) data into in-phase and quadrature (I/Q) data, video compressing the I/Q data to create compressed I/Q data, and then outputting the compressed I/Q data. Other embodiments of this aspect include corresponding computer systems, apparatus, and computer programs recorded on one or more computer storage devices, each configured to perform the actions of the methods.

Implementations may include one or more of the following features. The method may include imaging a tubular using an ultrasonic imaging tool and storing the compressed I/Q data on a local memory of the tool. In this context, the tubular may be a conduit, such as a pipe or a well. The method may include capturing ultrasound images of a mechanical or manufactured part using an imaging device, preferably an ultrasonic imaging device or a handheld imaging tool, the latter also being referred to as handheld ultrasonic testing tool, and outputting the compressed I/Q data in real-time to a separate computing device. The method may include decompressing the compressed I/Q data into decompressed I/Q data and beamforming the decompressed I/Q data to create ultrasound images. Preferably, the method includes compressing the I/Q data in an imaging device and decompressing the compressed I/Q data into decompressed I/Q data and beamforming the decompressed I/Q data to create ultrasound images in a separate computing device. I/Q conversion may include converting the radio frequency raw sampled data to in-phase/quadrature data through quadrature sampling or demodulation, then downsampling and decimating the I/Q data to create the downsampled I/Q data having a lower data rate than the radio frequency raw sampled data. The method may include combining or assembling multiple frames of I/Q data for the step of video compressing, preferably combining or assembling to a file size matched to a memory of a compression unit that performs the video compression. The combining may include grouping I and a terms together in the same tile or interlacing I terms and a terms. This allows improving the video compression ratio. Alternatively, the video compressing may include separately compressing I and Q terms in the converted I/Q data The video compressing may use h264/h265/h266 standard or optionally a newer standard. The h265 is High Efficiency Video Coding (HEVC) and may also be known as MPEG-H including MJPEG and MPEG. The transducer, processing circuits and memory may be parts in a handheld non-destructive testing tool. The transducer, processing circuits and memory may be included in each of plural imaging modules of an in-line inspection tool, preferably where the plural imaging modules each transfer their respective compressed I/Q data to a central network switch for uploading to external computing devices.

One general aspect includes an industrial inspection device having an ultrasonic phased-array transducer; one or more processing chips arranged to: sample ultrasonic reflections at high-frequency from the transducer to created radio-frequency raw sampled data, convert the raw sampled data into I/Q data, video compress the I/Q data to create compressed I/Q data. Within the present invention, the processing chips can also be referred to as processing circuits. The device further includes a memory configured to store the compressed I/Q data. Other embodiments of this aspect include corresponding computer systems, apparatus, and computer programs recorded on one or more computer storage devices, each configured to perform the actions of the methods.

Implementations may include one or more of the following features. The one or more processing chips of the device may include a video compression unit (VCU), for example a dedicated video compression unit, preferably arranged for high efficiency video coding through MPEG-H video compression standard. In other words, the VCU may be configured to compress I/Q data into a standard compression format, for example into MJPEG or MPEG. The one or more processing chips may include an ultrasonic front-end chip for driving the transducer. The ultrasonic front-end chip may be configured to sample received signals at the transducer. The received signals are preferably analogue signals. Furthermore, the received signals may be understood as the ultrasonic reflections. The ultrasonic front-end chip may further be configured to convert the analogue signals to the raw sampled data in digital format. Hence, the processing chip arranged to sample ultrasonic reflections from the transducer to create radio-frequency raw sampled data may correspond to the ultrasonic front-end chip. The industrial inspection device may include a first and a second device which are optionally communicatively connectable. The first device may be an imaging device. The second device may be a computing device. The computing device, which preferably is a remote computing device that may also be denoted remote processing device, is preferably communicatively connectable to a transfer network of the industrial inspection device. The remote computing device may be arranged to or configured to receive and decompress the compressed I/Q data from the memory and then beamform decompressed data to create ultrasound images. The industrial inspection device, in particular the imaging device, may further include a transfer network for outputting the compressed I/Q data from the memory. The transfer network may use gigabit or faster ethernet. The transfer network may be a wireless network arranged for real-time streaming of the compressed I/Q data or a wireless transfer unit arranged to wirelessly upload the compressed I/Q data. Furthermore, the transducer, the one or more processing circuits and the memory are preferably comprised in the imaging device, preferably in a handheld ultrasonic testing tool. The one or more processing circuits may be arranged to or configured to demodulate the raw sampled data by converting the raw sampled data to in-phase/quadrature (I/O) data, then downsample and decimate the I/Q data to create the I/Q data having a lower data rate than the radio-frequency raw sampled data. Also, the one or more processing circuits may be further arranged to or configured to assemble multiple frames of I/Q data into a tile for the step of video compressing, preferably creating said tile with image dimensions that fit video frame dimensions of a video compression unit that performs the video compression, wherein the assembling optionally comprises interlacing in-phase data of the multiple frames together with quadrature data of the multiple frames. Alternatively, the one or more processing circuits may be arranged to or configured to perform video compression by separately compressing In-Phase and Quadrature data in the demodulated data.

Thus preferred embodiments of the invention enable the device to image conduits, such as pipes and wells over long distances, providing the image data for real-time monitoring or subsequent visualization.

### BRIEF DESCRIPTION OF THE DRAWINGS

Various objects, features and advantages of the invention will be apparent from the following description of embodiments of the invention, as illustrated in the accompanying drawings. The drawings are not necessarily to scale, emphasis instead being placed upon illustrating the principles of various embodiments of the invention.
FIG. 1 is a flow diagram for processing ultrasonic data according to a preferred embodiment.
FIG. 2A is a perspective view of a handheld ultrasound imaging device.
FIG. 2B is a perspective view of a handheld imaging device inspecting a pipe.
FIG. 3 is a block diagram for compressing ultrasonic data.
FIG. 4 is an illustration of downmixing and decimation of an ultrasonic signal.
FIG. 5 is an ultrasonic image of a tubular for different downsampling factors.
FIG. 6 is a set of ultrasound images of a phantom using a prior art and I/Q beamformed image.
FIG. 7 is a pair of ultrasound images using RF data and I/Q compressed data.
FIG. 8 is a set of graphs of example signals through various steps of processing.
FIG. 9 is an illustration of frames assembled for compression.
FIG. 10 is an illustration of assembled frames showing the data as images.
FIG. 11 is a graph of raw RF data showing data decimation through quadrature sampling.

### DETAILED DESCRIPTION OF THE INVENTION

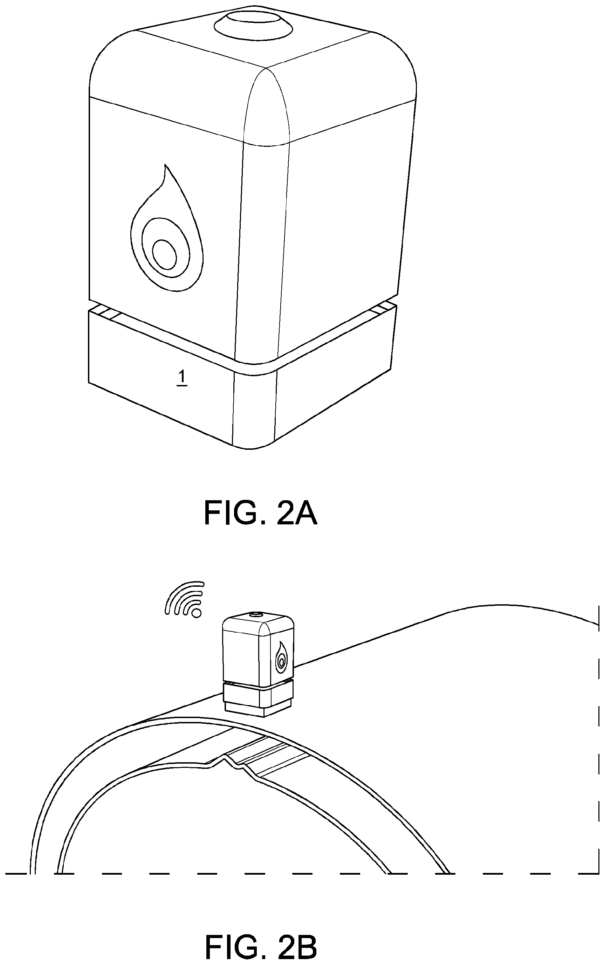

With reference to the accompanying figures, devices and methods are disclosed for capturing, processing, and storing ultrasonic reflections from an ultrasonic transducer array. In accordance with the embodiment of Figures 2A and 2B, there are imaging devices 1, 2 for inspecting tubulars or mechanical parts to detect flaws. The devices comprise phased-arrays generating large volumes of data, which are handled on-device so that the data can be manageably transferred off to another computing device for analysis.

As a persistent example used hereinbelow, the imaging device may be used to image long pipelines (e.g. >100 km) and comprise plural (e.g. 10) ultrasonic phased arrays, each having hundreds (e.g. 128) transducer elements. Acoustic reflections may be sampled at 40 Mhz for several hours. The total data may thus exceed 5000 TB (terabyte).

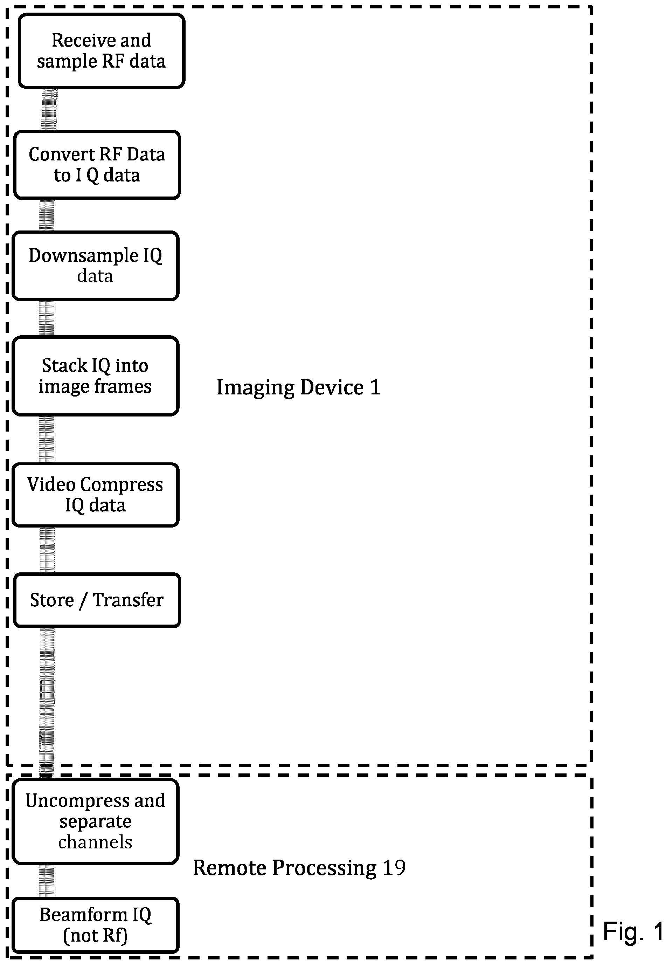

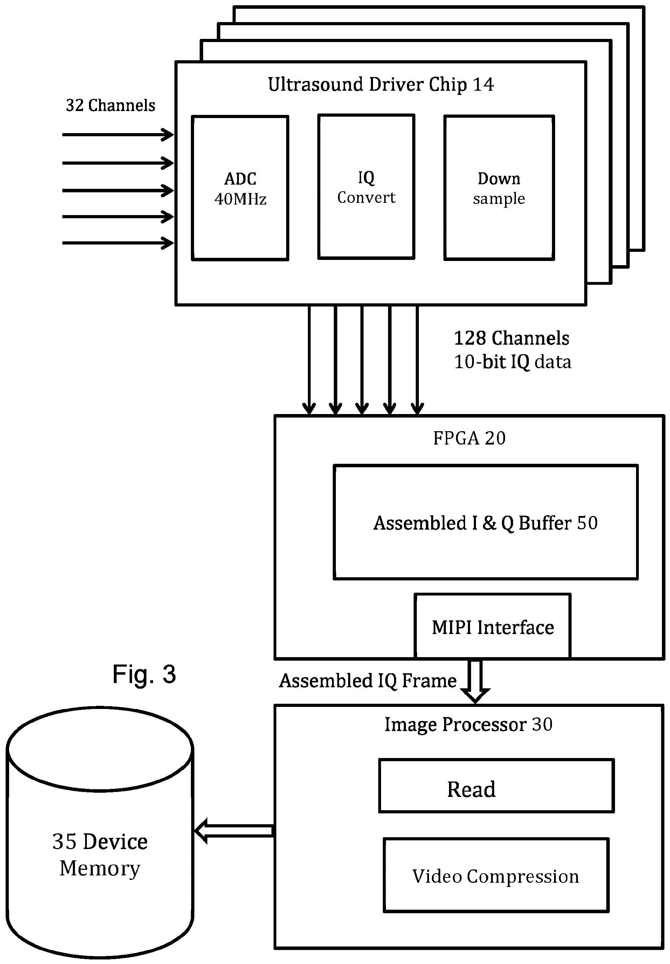

The device may comprise hardware, exemplified by Figure 3 for carrying out the compression process exemplified by Figure 1 to reduce the total data to output without sacrificing much image quality.

To make the ultrasonic channel data more manageable, it is compressed. This compression can happen in multiple steps. Figure 1 is a flowchart of data processing from data capture to beamforming. For clarity, certain sub-steps are omitted but are described in further detail below. The analog transducer channels are sampled at a high-frequency sampling frequency to create digital RF Data. The sampling frequency (e.g. 20-40Mhz) is typically at least four times that of the transmit frequency (e.g. 2-10Mhz). The RF data are then converted to I/Q data, which are then downsampled. The downsampled I/Q data are then assembled into an image frame for video compression.

The downsampled, compressed I/Q data are then stored on device memory or transferred to a remote computer for real-time inspection or offline analysis. On this computer 5, 19, separate from the imaging device, the compressed data is decompressed and unassembled into original I/Q data, still downsampled, for individual image captures. The processor then beamforms the I/Q data directly, i.e. without up-sampling or modulation back to RF data. This is different from existing systems where no compression is applied to raw channel data and beamforming is done on the original RF data to create an ultrasound image.

### Processing Blocks

Figure 3 provides a view of the data processing as it flows through various computing circuits. The transducer channels are electrically coupled to Ultrasonic driver chips 14 , which are commercially available and provide certain processing functions internally. An Acoustic Front-End chip will drive the transducers, receive analogue signals and convert to digital RF data. Texas Instruments AFE58JD32 is one such chip. These chip settings are set by control signals sent from the device's main processor. As exemplified, 32 channels are coupled to each driver chip 14 and there may be several driver chips. Here 128 channels can be sampled (and driven for wave transmission) at once. Multiplexing (not shown) would allow for more total transducer elements to be addressed over the device.

This chip is capable of capturing the channels at some settable sample frequency (e.g., 20-40MHz), converting this RF data to I/Q data, then downsampling or decimation. The combined output from these chips may provide 128 channels of downsampled I/Q data, which may be configured to 10-bits per channel. This data may be sent to a Field Programmable Gate Array (FPGA) 20 for further arrangement of data and to facilitate communication with the compression chip 30.

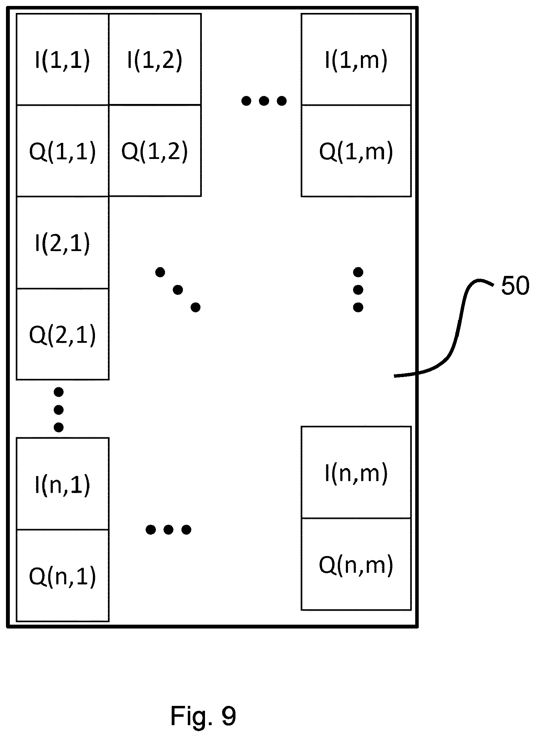

The FPGA may receive the downsampled I/Q data for plural frames and place them into the memory buffer 50 to assemble a tile of data. The FPGA may be programmed to re-arrange the order of the streamed data, change bit rates or data formats to create frames of I/Q data in the correct format. Each frame N represents the data captured for a full transmit event using the phased array, which frame may be for different or repeated steered angles M. As shown in Figure 9, the assembled buffer 50 may be arranged with contiguous and interleaved I and Q data streams from multiple frames to improve subsequent compression. The notation of Figure 9, I(n, m) or Q(n, m) indicates a single angle/transmit, so I (5,3) indicates the in-phase data for the 5th sample and 3rd channel of the transducer for a given transmit/angle; the different transmit/angle can then be placed next to each other in a single tile for video compression. Including both I and a terms together in one tile is efficient for video compression because the I and Q channels are not independent, but rather are related in space (since those can be seen as the same signal shifted by a quarter of a wavelength). An integrated Mobile Industry Processor Interface (MIPI interface) of the FPGA communicates with image processor 30 to stream out the image frame.

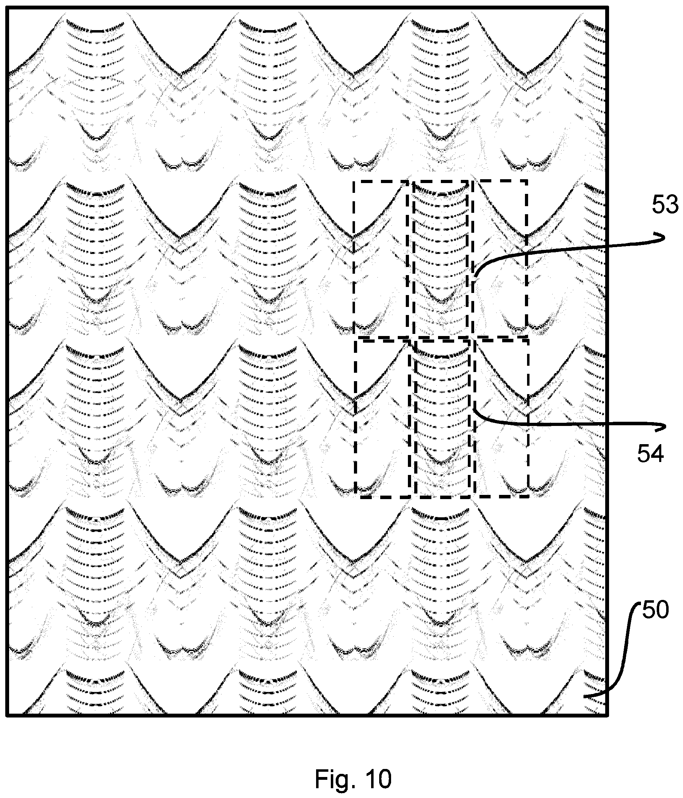

Figure 10 illustrates how the data would be assembled in the tile, represented as images, rather than the blocks of Figure 9. Here the three dashed boxes in 53 show Q-images for a given transducer channel for a positive, a Normal, and a negative steering angle, respectively. Dashed block 54 represents I-images interleaved on the next row of the tile. As can be appreciated, these blocks are highly similar and make for efficient video compression when this tile is sent to the image processor 30.

The image processor 30 reads the I/Q frame and compresses it using the standards H264, H265 (HVEC), and H266. The compressed image is stored to device memory 35. The image processor may be a VCU, in particular a VCU with dedicated compression hardware. Furthermore, the image processor may be part of a larger System on Module.

For efficiency, the dimensions of the I/Q tile matches the video compression unit's native image dimensions, which allows I/Q data from plural ultrasound images to be combined into one super I/Q tile, shown as the assembled I and Q buffer 50. For example, the VCU may be designed to compress 4K video, which is normally 4096 x 2160 pixels up to 10-bit depth. The VCU's memory and processing are optimized for data blocks of those dimensions. An exemplary 256 channel transducer, downsampled to 480 points and split into I and Q terms could thus be tiled 8 (8x 256 pixels < 2160) by 8 across (8 x 480 < 4096) to fit into the 4K memory. In this manner 36 ultrasound acquisitions can be compressed in a single operation.

### Conversion to I/Q Data

Quadrature sampling and Demodulation are known techniques for representing RF signals as in-phase and quadrature carriers. This technique is ideal for narrow band signals, such as the ultrasonic reflections, which may be sampled at 40 MHz and centered on 5 MHz for a 5 MHz centered array, with 80% of the signal bandwidth between 3 MHz and 7 MHz. The I/Q terms sample a specific part of the spectrum. This does initially double the data size as each channel is now represented by a I and Q data.

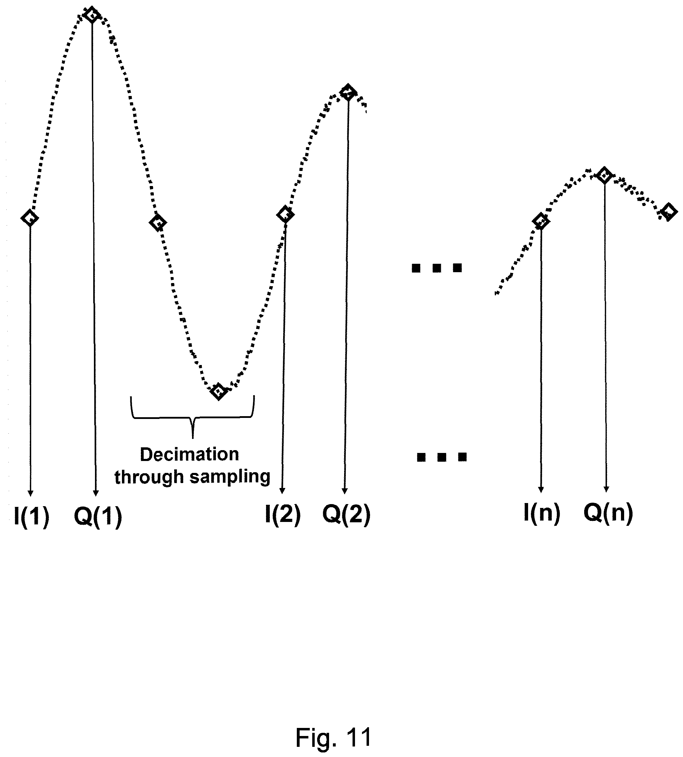

In quadrature sampling, The RF signals can be converted into I/Q signals by sampling with a quarter wavelength (90° shift) between the I and Q terms. Doing so will result directly in digital I/Q signals without need to sample the RF raw signals themself, if done analogically. A decimation step to reduce the number of samples can be done at the same time, during sampling giving the I/Q terms. FIG. 11 shows a graph of raw RF data showing data decimation through quadrature sampling. A data point at each quarter of the raw RF wave is selected to create the set {I(1), Q(1), I(2), Q(2)... I(n), Q(n)}. In some embodiments, one can ignore half of the quadrature samples and still re-create the original waveform through the remaining samples.

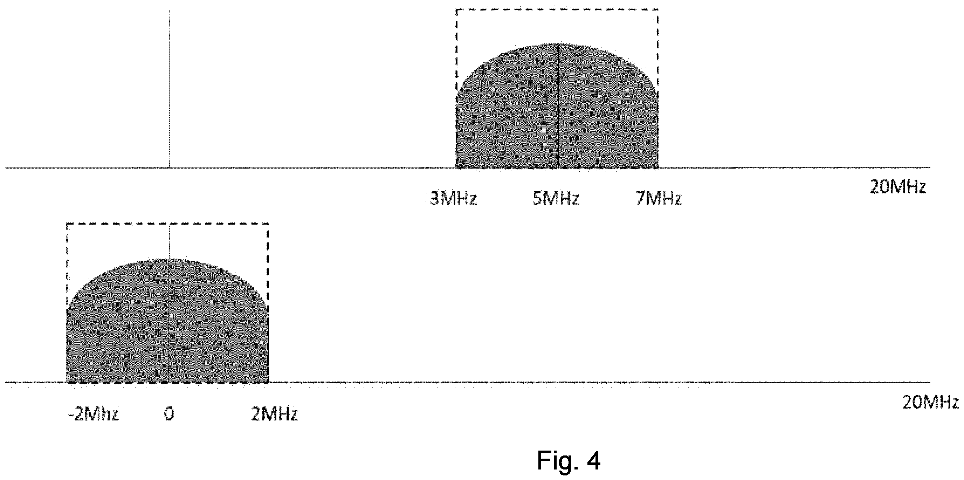

In demodulation shown in Figure 4, the raw I/Q data (above) can be downmixed by multiplying the I/Q data with a 5MHz sinusoid to get a signal centered on 0Hz (below), for example between -2Mhz and +2MHz. The unwanted frequencies are then removed by a low pass filter, such as a Finite Impulse Response (FIR) filter.

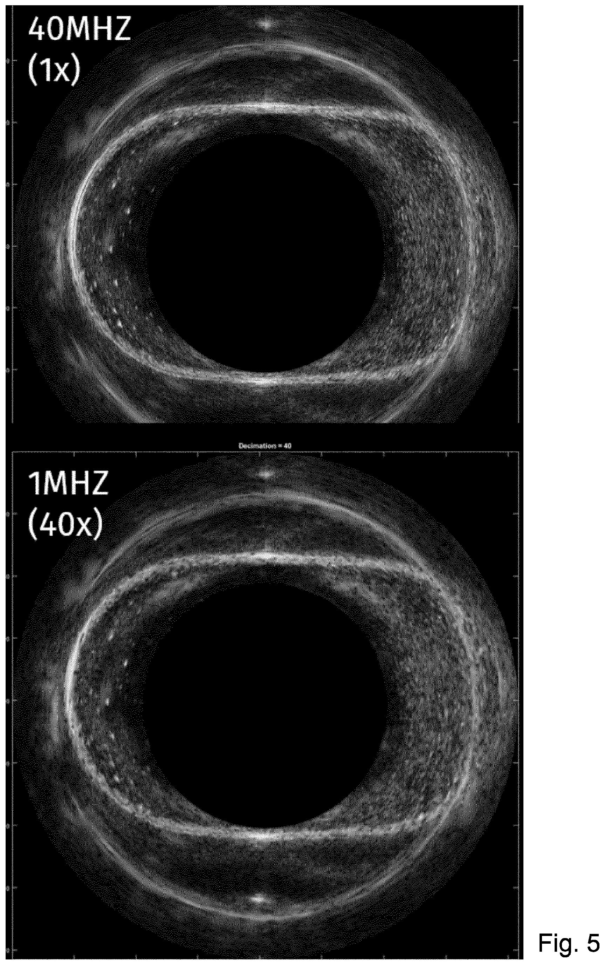

The downmixed I/Q signals are then decimated 5x, 10x, 20x, or 40x to reduce the total samples per channel. Figure 5 provides ultrasound images of a tubular from the original 40 MHz RF signal compared to the 40x decimated signal, effectively sampled at 1 MHz which matches the bandwidth of the received signals. There is very little signal loss. In practice, a preferred decimation of 10x or 20x balances quality with data reduction.

### Compression

The FPGA may assemble these downmixed, decimated I/Q signals into buffer 50, preferably interleaved I and a terms to improve video compression. Preferably this data is also encoded into smooth positive integer ranges. The MIPI transfers this buffer frame comprising multiple channels to the image processor. The image processor has a VCU for real-time video compression, using a codec, such as MJPEG or (HEVC) High Efficiency Video Coding (HEVC), also known as H.265 and MPEG-H Part 2.

HEVC compression on the assembled frame is able to compress the data by 10 to 100 times depending upon the sparsity and noisiness of the input data. Combining the 10x video compression with 40x decimation on the I/Q data (where I and a signals are double the signals of the RF alone) leads to a 200x overall (10x 40/2) compression factor. The compressed data can then be stored on a memory of the tool and transferred to a remote computing device. When a user is ready to view the ultrasound image, the compressed data is decompressed, but left in I/Q format.

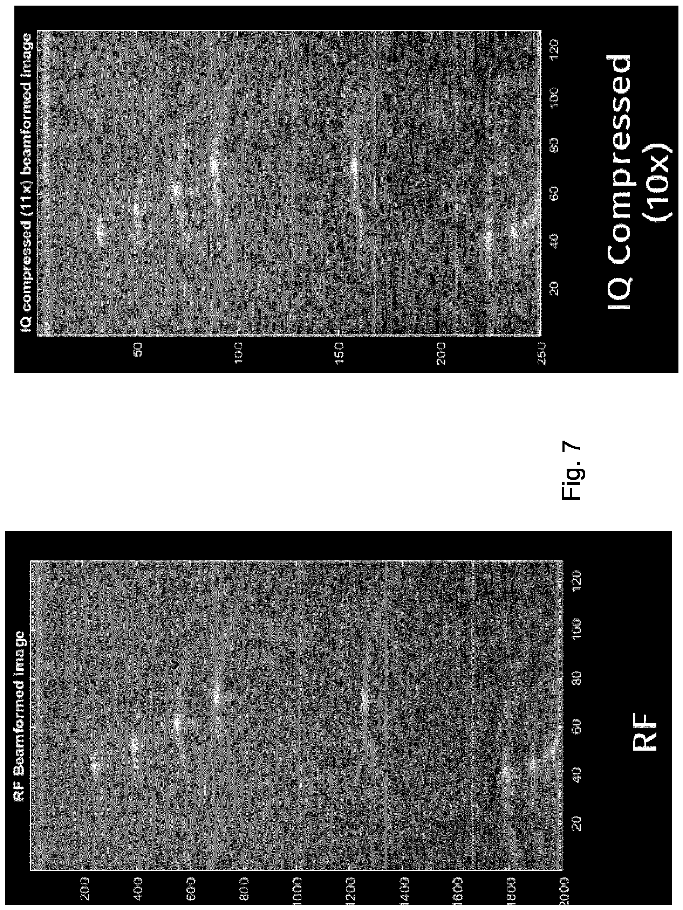

Figure 7 compares the beamformed image using the RF data to using the I/Q compressed data. The compressed data requires 10 times less data but produces a similar quality image.

### Beamforming

In preferred embodiments, the phased array emits a single defocused wave toward the inspection target. The wavefront may be a planewave or curved wave insonifying a large area of the target at once. This may use substantially all of the array elements for transmission and receiving for each image capture. Compared to a focused scan line, using only a subset of the array elements, a defocused wave returns reflections over a wide volume. Parallel beamforming deconvolves the reflections in the data to create an image by sampling from each channel at a time corresponding to the time-of-flight to each location and combines them to calculate the image value for the corresponding pixel.

Normally beamforming is performed on the original RF data or restored RF data using standard delay and sum algorithms. In preferred embodiments of the present system, beamforming is performed by the separate computing device (5, 19), on the decompressed I/Q data directly using a delay-and-phase beamformer coupled to a phase rotation algorithm. The beamforming is performed on the I/Q data without upsampling or modulating back to RF data.

To clarify, 'decompression' is used herein to describe the process of uncompressing compressed data into a second uncompressed data file, being distinct from uncompressed data that was never compressed.

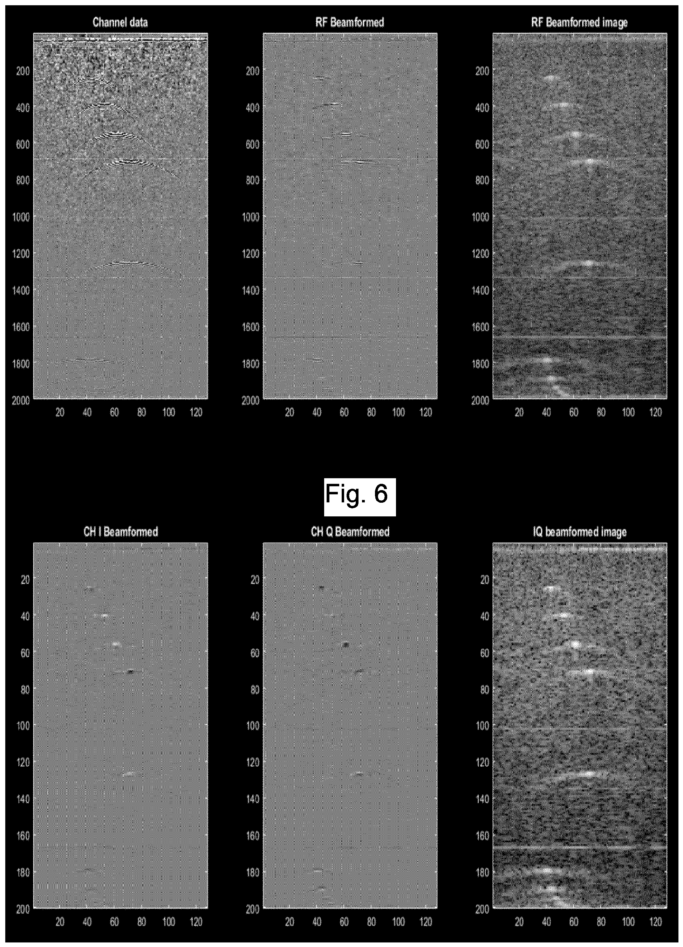

Figure 6 compares beamforming ultrasound data for 128 channels when beamforming is performed on RF data directly vs I/Q data. The I/Q data has been 10x decimated from 2000 samples in the original RF to 200 samples in the I/Q data.

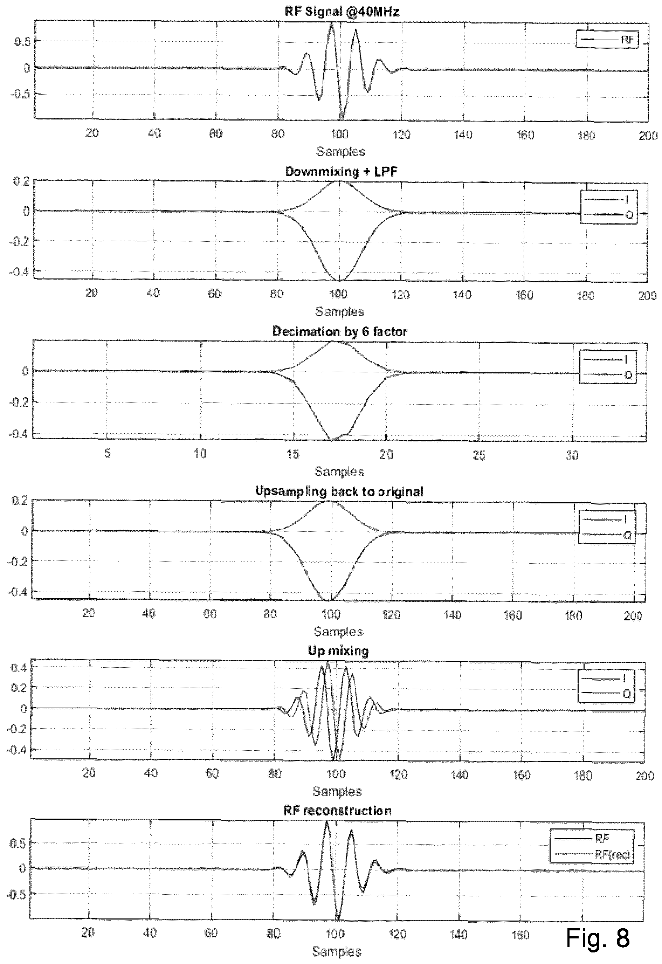

Figure 8 provides graphs of signals as they are processed from the original RF to reconstructed RF to demonstrate the integrity of the process. A typical ultrasonic pulse is sampled to capture the RF signal, which has a 5 MHz center frequency. I/Q demodulation, followed by downmixing and low pass filtering (LPF) creates I/Q data shifted to 0 Hz. This can be downsampled by a factor of 6 so that only 35 samples are kept, instead of the original 200 samples. This creates a coarser signal, still at 0Hz. That signal could be compressed and uncompressed (not shown). The process then proceeds in reverse, with upsampling to 200 samples, upmixing to 5 MHz then modulation back to RF. This reconstructed RF is shown to be very similar to the original.

### In-Line Inspection

In one application of the present method, ultrasonic imaging devices are present in an in-line inspection tool, commonly referred to as a PIG. Such a tool may have multiple imaging devices, each comprising ultrasonic sensors, ultrasonic driver 14, FPGA 20, image processor 30, and local memory 35. During in-line inspection, captured data is video compressed and stored in real-time to local memory. When a pipeline job is complete, there will be several Terabytes of compressed data to transfer out to a computer external to the tool.

Similar ultrasonic imaging devices and methods may be used in a downhole imaging tool, typically used to inspects oil and gas wells (cased or uncased). Wells are tubular in shape and typically a few kilometers, instead of the hundreds seen in pipelines, but there is still a vast amount of data generated that needs to be stored and uploaded.

### Ultrasonic Test device

In one application the present method and processing circuit may be used in a Non-Destructive Test (NDT) device, as shown in Figure 2A. The device may be the handheld variety, may be battery powered, and used for inspecting machined parts. In Figure 2B, an NDT device is shown inspecting the outside of a part, in particular, a pipeline near a defect. The device may have a wireless or pluggable wired connection to an external computer for further analysis or real-time analysis of the part. For precise imaging and analysis, the ultrasonic transducer phased array is preferably dense, comprising at least 128 channels and may be a 2D array, sampled at 20-40MHz. This in turn may require a data transfer rate of 10GB/s. This is well above communication means, such as WiFi.

The proposed compression method and circuitry is thus used to compress Rf data from the NDT transducer array and transfer it to an external computer using the wired or wireless network. The external computer then decompresses the I/Q demodulated, downsampled I/Q video stream and beamforms the I/Q terms to create an ultrasound image or video, which is then displayed on a screen. The external computer may be a mobile computing device running applications to beamform and render the ultrasound images.

The devices and system may comprise one or more computers configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

Without loss of generality, each of the processing components may comprise multiples of such chips, e.g., the memory may be multiple memory chips. For the sake of computing efficiency, several of the functions and operations described separately above may actually by combined and integrated within a chip. Conversely certain functions described above may be provided by multiple chips, operating in parallel.

The term 'processor' is intended to include computer processors, cloud processors, microcontrollers, firmware, GPUs, FPGAs, and electrical circuits that manipulate analogue or digital signals. While it can be convenient to process data as described herein, using software on a general computer, many of the steps could be implemented with purpose-built circuits. In preferred embodiments of the present system, the device processing circuits (14, 20, 30) provides signal conditioning, data compression and data storage, while the remote processor 19 provides data decompression and image processing.

It will be appreciated that the various memories discussed may be implemented as one or more memory units. Non-volatile memory is used to store the compressed data and instructions so that the device can function without continuous power. Volatile memory (RAM and cache) may be used to temporarily hold raw data and intermediate computations.

Although the present invention has been described and illustrated with respect to preferred embodiments and preferred uses thereof, it is not to be so limited since modifications and changes can be made therein which are within the full, intended scope as understood by those skilled in the art.

## Claims

1. A method of processing industrial ultrasonic data comprising the steps of:
a. sampling ultrasonic reflections to create radio-frequency raw sampled data;
b. converting the radio-frequency raw sampled data into In-phase / Quadrature (I/Q) data;
c. video compressing the I/Q data to create compressed I/Q data; and then
d. outputting the compressed I/Q data.

2. The method of claim 1, further comprising
imaging a tubular using an ultrasonic imaging tool and storing the compressed I/Q data on a local memory of the tool or
capturing ultrasound images of a manufactured part using a handheld imaging tool and outputting the compressed data in real-time to a separate computing device.

3. The method of claim 1 or 2, further comprising decompressing the compressed I/Q data into decompressed I/Q data and beamforming the decompressed I/Q data to create ultrasound images.

4. The method of any of claims 1 to 3, wherein converting comprises demodulating the raw sampled data to the I / a data, then downsampling and decimating the I / a data to create the demodulated data having a lower data rate than the raw sampled data.

5. The method of any of claims 1 to 3, wherein converting comprises quadrature sampling the raw sampled data to the in-phase/quadrature (I / Q) data, preferably then downsampling and decimating the I / a data to create said I/Q data having a lower data rate than the radio-frequency raw sampled data.

6. The method of any of claims 1 to 5, further comprising assembling multiple frames of I/Q data into a tile for the step of video compressing, preferably creating said tile with image dimensions that fit video frame dimensions of a video compression unit that performs the video compression, wherein the assembling optionally comprises interlacing in-phase data of the multiple frames together with quadrature data of the multiple frames.

7. The method of any of claims 1 to 5, wherein the video compressing comprises separately video compressing In-phase and Quadrature data and/or wherein the video compressing comprises MJPEG or MPEG compression.

8. An industrial inspection device comprising:
an ultrasonic phased-array transducer;
one or more processing circuits arranged to:
sample ultrasonic reflections from the transducer to create radio-frequency raw sampled data;
convert the radio-frequency raw sampled data into I/Q data; then video compress the I/Q data to create compressed I/Q data; and
a memory to store the compressed I/Q data.

9. The device of claim 8, wherein the one or more processing circuits includes a dedicated video compression unit, preferably arranged for MJPEG or MPEG compression, and/or an ultrasonic front-end chip for driving the ultrasonic phased-array transducer, sampling received signals at the ultrasonic phased-array transducer, and analogue-to-digital converting the reflections to the radio-frequency raw sampled data.

10. The device of claim 8 or 9, further comprising a remote computing device communicatively connectable to a transfer network of the device and arranged to receive and decompress the compressed I/Q data from the memory and then beamform uncompressed I/Q data to create ultrasound images.

11. The device of any of claims 8 to 10, wherein the transducer, processing circuits and memory are comprised in a handheld ultrasonic testing tool.

12. The device of any of claims 8 to 11, further comprising a wireless transfer unit arranged to wirelessly upload the compressed I/Q data.

13. The device of any of claims 8 to 12, wherein the one or more processing circuits is arranged to demodulate the raw sampled data by converting the raw sampled data to in-phase/quadrature (I/Q) data, then downsample and decimate the I/Q data to create the I/Q data having a lower data rate than the radio-frequency raw sampled data.

14. The device of any of claims 8 to 13, wherein the one or more processing circuits is further arranged to assemble multiple frames of I/Q data into a tile for the step of video compressing, preferably creating said tile with image dimensions that fit video frame dimensions of a video compression unit that performs the video compression, wherein the assembling optionally comprises interlacing in-phase data of the multiple frames together with quadrature data of the multiple frames.

15. The device of any of claims 8 to 13, wherein the one or more processing circuits is arranged to perform video compression by separately compressing In-Phase and Quadrature data in the demodulated data.
